# FASCICULE DE BREVET EUROPEEN

(11) **EP 3 142 895 B1**
(45) Date de publication et mention de la délivrance du brevet: **16.06.2021**
(21) Numéro de dépôt: 15719786.4
(22) Date de dépôt: 25.03.2015
(51) Int. Cl.: B60Q 1/00, H05B 33/08, B60Q 1/30, F21Y 101/00

(54) **PILOTAGE DE L'ÉCLAIRAGE DE SIGNALISATION ARRIÈRE POUR VÉHICULE AUTOMOBILE**
SYSTEM ZUR STEUERUNG DER HECKSIGNALBELEUCHTUNG FÜR EIN KRAFTFAHRZEUG
SYSTEM FOR CONTROLLING REAR SIGNAL LIGHTING FOR A MOTOR VEHICLE

(30) Priorité: 11.04.2014 FR 1453232
(43) Date de publication de la demande: 22.03.2017
(73) Titulaire: Renault S.A.S., 92100 Boulogne-Billancourt (FR)
(72) Inventeur: MAHE, Michel, 78280 Guyancourt (FR); GELFI, Sylvain, 78450 Villepreux (FR)
(86) Numéro de dépôt international: PCT/FR2015/050746
(87) Numéro de publication internationale: WO 2015/155433

(56) Documents cités:
- EP-A1- 0 347 293
- EP-A1- 2 501 206
- EP-A1- 2 549 836
- DE-C1- 657 047
- FR-A3- 2 990 905
- US-A1- 2004 036 418
- US-A1- 2010 244 697

## Description

La présente invention concerne une optimisation de l'architecture de pilotage de la signalisation arrière sur un véhicule automobile.

De nombreux constructeurs automobiles proposent actuellement des modèles de véhicules dans lesquels tous les dispositifs de signalisation arrière, en particulier les feux de position, les indicateurs de direction et les feux stop, sont portés par la porte ou hayon du coffre, et non plus sur le montant des ailes arrières du véhicule. Grâce à ces portes ou hayons dits « autoclaves », l'accès au coffre du véhicule est facilité car les montants des ailes arrière peuvent être affinés.

Le document FR2990905 divulgue l'agencement d'un feu de signalisation arrière pour remédier à un inconvénient de complexité engendrée par la présence de deux feux complets, un feu arrière supplémentaire porté par la caisse du véhicule assurant la signalisation du véhicule même lorsque la porte de coffre est ouverte. Selon l'agencement divulgué, seule une partie principale, portée par le côté de caisse, comporte un boîtier muni d'une source d'éclairage. Une partie complémentaire portée par la porte de coffre, comporte un moyen de guidage de la lumière émise par la source de la partie principale.

Néanmoins, pour satisfaire à la règlementation et être en conformité en condition d'arrêt ou même de roulage avec le hayon ouvert, il faut doubler impérativement les feux de signalisation en prévoyant un deuxième ensemble de signalisation.

On connaît déjà, du document US 2010/0244697 A1, un système de pilotage de l'éclairage de signalisation arrière pour véhicule automobile, comprenant un premier ensemble de dispositifs de signalisation disposés sur l'extérieur d'une porte de coffre, aptes à fonctionner lorsque la porte du coffre est en position fermée, et un deuxième ensemble de dispositifs de signalisation aptes à fonctionner lorsque la porte du coffre est en position ouverte en se substituant aux dispositifs de signalisation du premier ensemble.

La problématique qui se pose avec ce type de systèmes réside dans l'optimisation de l'architecture afin de permettre à moindre coût le pilotage électronique des différents dispositifs de signalisation.

La présente invention a pour but de proposer une telle architecture optimisée qui ne nécessite aucune modification au niveau de la gestion actuellement centralisée de la signalisation arrière d'un véhicule, et qui soit en outre aisément compatible avec la possibilité de fonctionner avec un autre système gérant la signalisation à l'arrière d'une remorque, lorsque cette remorque est tractée par le véhicule.

A cet effet, l'invention a pour objet un système de pilotage de l'éclairage de signalisation arrière pour véhicule automobile selon la revendication 1.

Selon d'autres caractéristiques possibles, éventuellement prises en combinaison :
- le deuxième ensemble de dispositifs de signalisation est apte à être disposé de manière à ne pas être visible de l'extérieur lorsque la porte de coffre est fermée ;
- en variante, le deuxième ensemble de dispositifs de signalisation est apte à être disposé de manière à être visible de l'extérieur lorsque la porte de coffre est fermée ;
- l'information représentative d'une porte de coffre en position ouverte ou fermée est reçue d'un unique capteur ;
- en variante, l'information représentative d'une porte de coffre en position ouverte ou fermée est reçue d'un ensemble de deux capteurs ;
- dans ce dernier cas, les deux capteurs peuvent être des interrupteurs connectés en parallèle, chaque interrupteur étant en position ouverte lorsque la porte de coffre est fermée, ou alors des interrupteurs connectés en série, chaque interrupteur étant en position fermée lorsque la porte de coffre est fermée ;
- le premier ensemble et le deuxième ensemble comprennent au moins un feu de position et les indicateurs de direction;
- le premier ensemble et le deuxième ensemble comprennent en outre les feux stop.
- le premier ensemble et/ou le deuxième ensemble comportent avantageusement deux modules, un premier module gauche regroupant un feu de position gauche, un indicateur de direction gauche et un feu stop gauche, et un deuxième module droit regroupant un feu de position droit, un indicateur de direction droit et un feu stop gauche, et ladite logique de commande est répartie dans deux modules pris dans chacun des premier et deuxième ensembles ;
- chacun des premier ensemble et des deuxième ensemble peut comporter un « OU » à diodes pour permettre l'alimentation de la logique de commande à partir d'au moins une borne d'activation parmi un ensemble de bornes d'activation aptes à activer les dispositifs de signalisation ;
- au moins une source lumineuse est une diode électroluminescente, ou une OLED.

Les caractéristiques et avantages de la présente invention ressortiront de la description suivante, faite en référence aux figures annexées, dans lesquelles :
- la figure 1 illustre de façon schématique le schéma électrique d'un système de pilotage de la signalisation arrière d'un véhicule automobile, selon un premier mode de réalisation possible de l'invention ;
- la figure 2 illustre de façon schématique le schéma électrique d'un système de pilotage de la signalisation arrière d'un véhicule automobile, selon un deuxième mode de réalisation possible de l'invention.

Dans la suite, les éléments communs à l'ensemble des figures portent les mêmes références.

A titre d'exemple non limitatif, on considère dans la suite que le véhicule automobile dont on souhaite piloter l'éclairage de signalisation arrière aussi bien en position fermée qu'en position ouverte du hayon comporte, à l'arrière, les fonctions de signalisation suivantes :
- Deux feux de position, l'un à droite, l'autre à gauche ;
- Deux indicateurs de direction, l'un à droite, l'autre à gauche ;
- Deux feux stop, l'un à droite, l'autre à gauche.

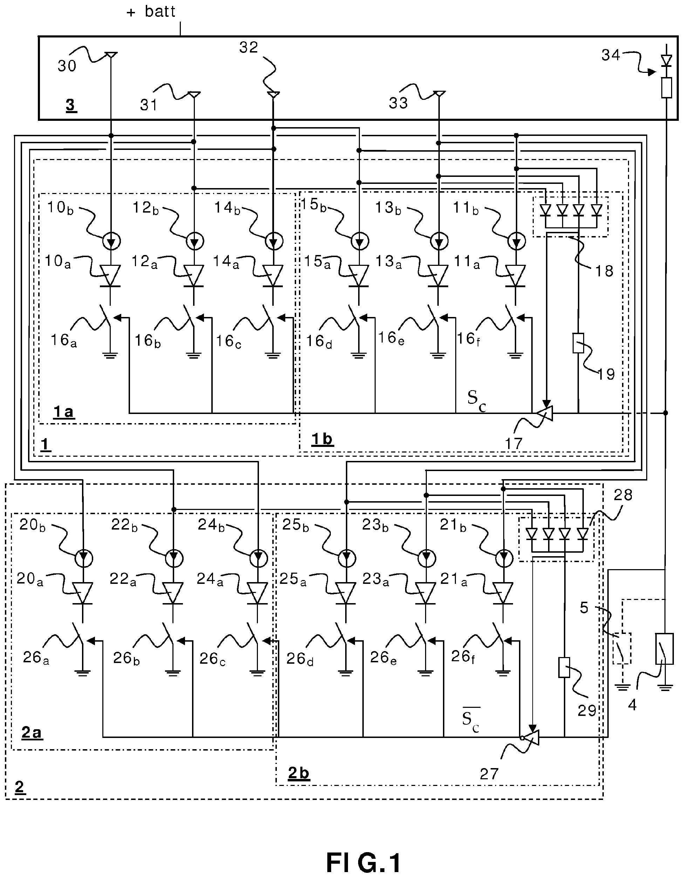

En référence à la figure 1, le système de pilotage comporte en conséquence un premier ensemble 1 de dispositifs de signalisation, correspondant, dans notre exemple :
- aux feux de position gauche et droit, respectivement 10ₐ et 11ₐ;
- aux indicateurs de direction gauche et droit, respectivement 12ₐ et 13a ;
- aux feux stop gauche et droit, respectivement 14ₐ et 15ₐ.

Les différentes fonctionnalités peuvent être avantageusement regroupées dans un même système d'optique arrière, l'un pour le côté gauche du véhicule, l'autre pour le côté droit du véhicule.

Ainsi, comme schématisé en traits interrompus sur la figure 1, le feu de position gauche 10ₐ, l'indicateur de direction gauche 12ₐ et le feu stop gauche 14ₐ sont regroupés dans un même module gauche 1a, alors que le feu de position droit 11ₐ, l'indicateur de direction droit 13ₐ et le feu stop droit 15ₐ sont regroupés dans un même module droit 1a. D'autres arrangements sont néanmoins possibles sans départir du cadre de l'invention.

Les dispositifs de signalisation du premier ensemble 1 sont disposés sur l'extérieur de la porte ou hayon du coffre, et doivent être par conséquent aptes à fonctionner lorsque la porte du coffre est en position fermée.

De même, un deuxième ensemble 2 de dispositifs de signalisation est prévu pour se substituer aux dispositifs de signalisation du premier ensemble, et comprend donc ici :
- des feux de position gauche et droit, respectivement 20ₐ et 21ₐ;
- des indicateurs de direction gauche et droit, respectivement 22ₐ et 23ₐ ;
- des feux stop gauche et droit, respectivement 24ₐ et 25ₐ.

Le deuxième ensemble 2 de dispositifs de signalisation est destiné à être disposé de manière à être visible de l'extérieur lorsque la porte de coffre est ouverte. Néanmoins, il peut être prévu à l'intérieur du coffre, de sorte qu'il n'est pas visible de l'extérieur lorsque la porte de coffre est fermée, ou bien à l'extérieur du coffre, par exemple sur le bouclier arrière du véhicule, de manière à être visible quelle que soit la position du coffre.

Ici encore, les différentes fonctionnalités peuvent être avantageusement regroupées dans un même système d'optique arrière, l'un pour le côté gauche du véhicule, l'autre pour le côté droit du véhicule.

Ainsi, comme schématisé en traits interrompus sur la figure 1, le feu de position gauche 20ₐ, l'indicateur de direction gauche 22ₐ et le feu stop gauche 24ₐ sont regroupés dans un même module gauche secondaire 2a, alors que le feu de position droit 21ₐ, l'indicateur de direction droit 23ₐ et le feu stop droit 25ₐ sont regroupés dans un même module droit secondaire 2a, d'autres arrangements étant néanmoins possibles sans départir du cadre de l'invention.

Chacun des dispositifs de signalisation du premier et du deuxième ensembles 1, 2 comporte une source lumineuse, par exemple une ou plusieurs diodes électroluminescentes. D'autres sources lumineuses telles que des OLED ou des ampoules classiques peuvent être envisagées sans départir du cadre de l'invention. Les diodes électroluminescentes sont ici représentées avec leur dispositif de régulation en courant associés 10_{b}-15_{b} pour les sources lumineuses du premier ensemble 1, et 20_{b}-25_{b} pour les sources lumineuses du deuxième ensemble 2.

Pour chacun des ensembles 1 et 2, un interrupteur est en outre prévu en série avec chaque source lumineuse. Ainsi, l'interrupteur 16ₐ est en série avec la LED 10ₐ du feu de position gauche, l'interrupteur 16_{b} est en série avec la LED 12ₐ de l'indicateur de direction gauche, et ainsi de suite.

Chaque association série d'une source lumineuse, d'un interrupteur, et le cas échéant d'un dispositif de régulation, représente donc une fonctionnalité de signalisation, et est connectée entre une masse électrique et une borne d'activation apte à délivrer une puissance d'alimentation lorsque la fonctionnalité est activée. Ainsi, dans l'exemple représenté :
- La borne d'activation 30 délivre une puissance aux feux de position gauches 10a, 20a et droits 11a, 21a des deux ensembles 1, 2 lorsque le conducteur a commandé l'activation de cette fonctionnalité, typiquement au moyen d'un organe de commande du tableau de bord du véhicule, en général un commodo situé à gauche du volant pour une conduite à droite;
- La borne d'activation 31 délivre une puissance aux indicateurs de direction gauches 12a, 22a des deux ensembles 1, 2 lorsque le conducteur a commandé l'activation de cette fonctionnalité, typiquement au moyen d'un organe de commande du tableau de bord du véhicule, en général le même commodo que celui utilisé pour les feux de position, ou encore au moyen d'un bouton de commande pour l'activation des feux de détresse;
- La borne d'activation 32 délivre une puissance aux feux stop gauches 14a, 24a et droits 15a, 25a des deux ensembles 1, 2 dès lors que le conducteur appuie sur une pédale de frein ;
- La borne d'activation 33 délivre une puissance aux indicateurs de direction droits 13a, 23a des deux ensembles 1, 2 lorsque le conducteur a commandé l'activation de cette fonctionnalité, typiquement au moyen d'un organe de commande du tableau de bord du véhicule ou encore au moyen d'un bouton de commande pour l'activation des feux de détresse.

Les bornes d'activation 30-33 peuvent être regroupées au niveau d'un unique boitier 3 de commande centralisé, comme représenté sur les figures, ou réparties dans plusieurs boîtiers de commande.

Le système comporte en outre au moins un capteur 4 apte à fournir une information représentative de l'état ouvert ou fermé de la porte du coffre. Ce capteur est généralement déjà disponible sur le véhicule, en particulier pour alerter le conducteur sur les conditions d'utilisation du coffre. Il s'agit en général d'un interrupteur à deux états. Dans l'exemple de la figure 1, le capteur 4 est un interrupteur en position ouverte lorsque la porte de coffre est fermée, et en position fermée lorsque la porte de coffre est ouverte. Le capteur 4 est relié entre la masse électrique et la sortie d'un circuit d'alimentation 34, prévu par exemple au niveau du boîtier 3 de commande.

Le système comporte enfin une logique de commande intégrée au moins en partie dans le premier ensemble 1 et le deuxième ensemble 2, la logique de commande étant apte à commander simultanément :
- soit l'ouverture de tous les interrupteurs 16ₐ-16_{f} en série avec les sources lumineuses 10ₐ-15ₐ du premier ensemble 1 et la fermeture de tous les interrupteurs 26ₐ-26_{f} en série avec les sources lumineuses 20ₐ-25ₐ du deuxième ensemble 2 lorsque l'information issue du capteur 4 est représentative d'une porte de coffre en position ouverte ;
- soit la fermeture de tous les interrupteurs 16ₐ-16_{f} en série avec les sources lumineuses 10ₐ-15ₐ du premier ensemble 1 et l'ouverture de tous les interrupteurs 26ₐ-26_{f} en série avec les sources lumineuses 20ₐ-25ₐ du deuxième ensemble 2 lorsque l'information issue du capteur 4 est représentative d'une porte de coffre en position fermée.

Dans l'exemple de la figure 1, la logique de commande comporte :
- un amplificateur 17 pour l'ensemble 1, dont l'entrée est reliée électriquement au capteur 4, et reçoit donc l'information relative à la position du coffre, et dont la sortie délivre un premier signal de commande S_{C} apte à commander le basculement de l'ensemble des interrupteurs 16a à 16f.
- un amplificateur inverseur 27 pour l'ensemble 2, dont l'entrée est également reliée électriquement au capteur 4, et reçoit donc l'information relative à la position du coffre, et dont la sortie délivre un deuxième signal de commande S_{C} complémentaire du premier signal de commande S_{C}, et apte à commander le basculement de l'ensemble des interrupteurs 26a à 26f.

Pour que le temps de réaction du basculement entre le premier ensemble 1 et le deuxième ensemble 2 soit le plus court possible, les différents éléments constituant la logique de commande doivent être dans des états stables et alimentés. Pour l'alimentation, on peut prévoir une alimentation spécifique, par exemple en utilisant la tension de la batterie + batt.

Néanmoins, on utilise de préférence la solution d'alimentation présentée sur la figure 1 grâce à laquelle la logique de commande est alimentée par l'intermédiaire d'une des bornes d'activation 30-33 apte à délivrer une puissance d'alimentation lorsque la fonctionnalité est activée. Pour ce faire, on peut prévoir un « OU » à diodes 18, 28, de préférence intégré au niveau de chacun des ensembles 1, 2. Ici, quatre diodes sont nécessaires dans chacun des ensembles 1, 2 pour permettre à l'une quelconque des bornes d'activation 30-33 de fournir la puissance d'alimentation nécessaire, dès lors que la fonctionnalité associée est activée, et alimenter en conséquence d'une part, l'amplificateur 17 et d'autre part, l'amplificateur inverseur 27. La sortie du « OU » à diodes 18 est en outre connectée à l'entrée de l'amplificateur 17 au travers d'une résistance 19 de polarisation. De même, La sortie du « OU » à diodes 28 est connectée à l'entrée de l'amplificateur inverseur 27 au travers d'une résistance 29 de polarisation.

Le tableau 1 suivant résume le fonctionnement du système :

**Tableau 1**

| Porte du coffre | Interrupteur 4 | Etat logique Interrupteur 4 | Interrupteurs 16a-16f | Interrupteurs 26a-26f | Ensembles 1/2 |
|---|---|---|---|---|---|
| Ferm ée | Ouvert | 1 | Fermés | Ouverts | 1 allumé |
| | | | | | 2 éteint |
| Ouverte | Fermé | 0 | Ouverts | Ferm és | 2 allumé |
| | | | | | 1 éteint |

Comme indiqué précédemment, un seul capteur 4 peut être utilisé.

Néanmoins, pour être compatible avec les exigences de la norme ISO 26262, et en particulier avec le niveau d'exigence ASIL B (ASIL étant l'acronyme anglo-saxon mis pour Automotive Safety Integrity Level) pour les feux stops, on prévoit de préférence d'utiliser un deuxième capteur 5, typiquement un deuxième interrupteur connecté en parallèle sur le capteur 4. Le deuxième capteur 5 est par exemple positionné sur la feuillure du coffre ou sur l'un des vérins du hayon.

Avec un tel système, on s'assure que dès que l'un des interrupteurs 4 ou 5 se ferme car la porte du coffre s'ouvre, le système basculera sur la signalisation du deuxième ensemble. Dans le cas où l'un des interrupteurs reste bloqué en position fermée, les feux de signalisation du premier ensemble seront, dans cette configuration, toujours éteints, et les feux de signalisation du deuxième ensemble seront toujours allumés (en supposant bien que sûr qu'ils aient été activés par ailleurs). De même, en cas de court-circuit à la masse du faisceau électrique de ces interrupteurs 4 ou 5, le système permet de basculer automatiquement et de rester sur la signalisation du deuxième ensemble, dans l'attente d'une réparation.

Le tableau 2 ci-après résume le fonctionnement du système :

**Tableau 2**

| Porte du coffre | Etat logique Interrupteur 4 | Etat logique Interrupteur 5 | Etat logique des deux interrupteurs 4, 5 en parallèle | Ensemble 1 | Ensemble 2 |
|---|---|---|---|---|---|
| Fermée | 1 | 1 | 1 | Allumé | Eteint |
| Ouverte (début) | 0 | 1 | 0 | Eteint | Allumé |
| Ouverte (complet) | 0 | 0 | 0 | Eteint | Allumé |
| Ouverte + interrupteur 4 défaillant | 1 | 0 | 0 | Eteint | Allumé |

La logique de commande (amplificateurs 17 et 27) les « OU » à diodes 18, 28 et les résistances de polarisation 19, 29 sont avantageusement intégrées dans deux des quatre modules pris dans chaque ensemble 1, 2, par exemple dans les modules droits 1b et 2b, comme illustré sur la figure 1.

Le système représenté sur la figure 1 part de l'hypothèse que le capteur 4, de même que le capteur supplémentaire 5 lorsqu'il est présent, sont des interrupteurs à l'état normalement ouvert lorsque la porte du coffre est fermée.

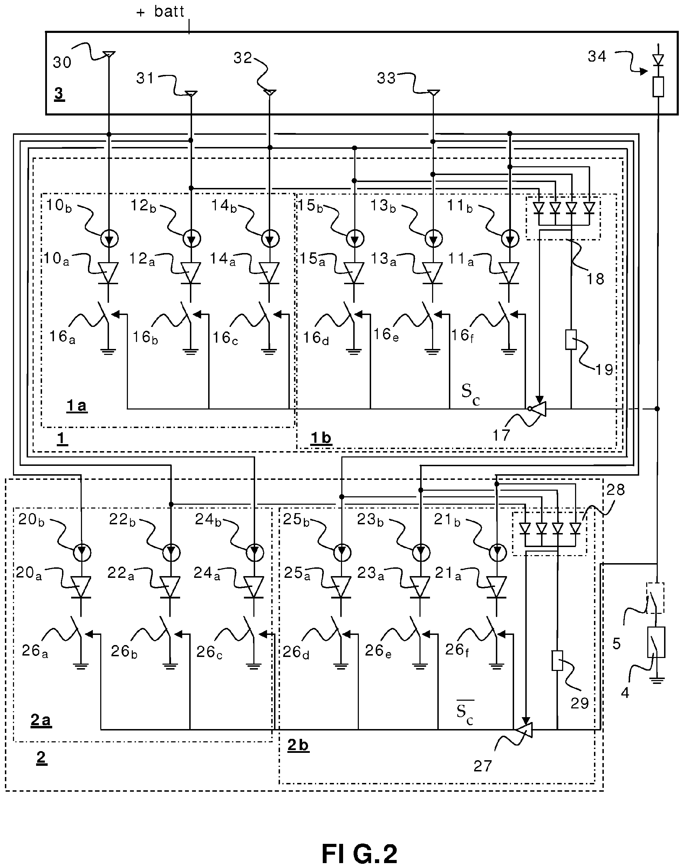

La figure 2 illustre un deuxième mode de réalisation adapté au cas où capteur 4, de même que le capteur supplémentaire 5 lorsqu'il est présent, sont des interrupteurs à l'état normalement fermé lorsque la porte du coffre est fermée.

Dans ce cas, la logique au niveau des ensembles 1 et 2 est inversée : l'amplificateur 17 étant ici un amplificateur inverseur alors que l'amplificateur 27 ne l'est pas. De plus, lorsque l'on utilise un capteur supplémentaire 5, ce capteur 5 est connecté en série avec le capteur 4, au lieu d'être connecté en parallèle.

Dans tous les cas, la présente invention permet d'offrir un système qui ne nécessite aucune modification particulière au niveau du boîtier 3 de commande centralisé. La solution proposée est en outre très économique en composants électroniques. En effet, il n'est pas nécessaire de développer des cartes électroniques supplémentaires pour les ensembles 1, 2. Seules les dimensions des cartes existantes doivent être éventuellement agrandies pour permettre l'ajout de la logique de commande, et éventuellement des interrupteurs 16ₐ-16_{f} et 26ₐ-26_{f}.

En outre, il est possible d'utiliser des transistors déjà existants dans le schéma de régulation des sources lumineuses utilisées pour réaliser tout ou partie des interrupteurs 16ₐ-16_{f} et 26ₐ-26_{f}.

Enfin, le câblage et la connectique ne sont pas non plus beaucoup plus complexes.

Le système reste compatible avec une architecture utilisant en outre un boîtier supplémentaire apte à gérer la signalisation d'une remorque.

## Revendications

1. Système de pilotage de l'éclairage de signalisation arrière pour véhicule automobile, comprenant un premier ensemble (1) de dispositifs de signalisation disposés sur l'extérieur d'une porte de coffre, aptes à fonctionner lorsque la porte du coffre est en position fermée, un deuxième ensemble (2) de dispositifs de signalisation aptes à fonctionner lorsque la porte du coffre est en position ouverte en se substituant aux dispositifs de signalisation du premier ensemble, et un capteur (4) apte à fournir une information représentative de l'état ouvert ou fermé de la porte du coffre, caractérisé en ) ce que chaque dispositif de signalisation comporte une source lumineuse (10ₐ-15ₐ, 20ₐ-25ₐ) en série avec un interrupteur (16ₐ-16_{f}, 26ₐ-26_{f}), et en ce que le système comporte une logique de commande (17, 27) intégrée au moins en partie dans lesdits premier et deuxième ensembles (1, 2), la logique de commande (17, 27) comportant un amplificateur (17) pour le premier ensemble (1) et un amplificateur inverseur (27) pour le deuxième ensemble (2), l'entrée de l'amplificateur (17) étant reliée électriquement au capteur (4) et la sortie de l'amplificateur (17) délivrant un premier signal de commande apte à commander le basculement de l'ensemble des interrupteurs (16ₐ-16_{f}) du premier ensemble (1), l'entrée de l'amplificateur inverseur (27) étant ) également reliée électriquement au capteur (4), la sortie de l'amplificateur inverseur (27) délivrant un deuxième signal de commande complémentaire du premier signal de commande, et apte à commander le basculement de l'ensemble des interrupteurs (26ₐ-26_{f}.) du deuxième ensemble (2), de sorte que la logique de commande est apte à commander simultanément :
soit l'ouverture de tous les interrupteurs (16ₐ-16_{f}) en série avec les sources lumineuses (10ₐ-15ₐ) du premier ensemble (1) et la fermeture de tous les interrupteurs (26ₐ-26_{f}) en série avec les sources lumineuses (20ₐ-25ₐ) du deuxième ensemble (2) sur réception d'une information représentative d'une porte de coffre en position ouverte ;
soit la fermeture de tous les interrupteurs (16ₐ-16_{f}) en série avec les sources lumineuses (10ₐ-15ₐ) du premier ensemble (1) et l'ouverture de tous les interrupteurs (26ₐ-26_{f}) en série avec les sources lumineuses (20ₐ-25ₐ) du deuxième ensemble (2) sur réception d'une information représentative d'une porte de coffre en position fermée.

2. Système de pilotage selon la revendication 1, dans lequel le deuxième ensemble (2) de dispositifs de signalisation est apte à être disposé de manière à ne pas être visible de l'extérieur lorsque la porte de coffre est fermée.

3. Système de pilotage selon la revendication 1, dans lequel le deuxième ensemble (2) de dispositifs de signalisation est apte à être disposé de manière à être visible de l'extérieur lorsque la porte de coffre est fermée.

4. Système de pilotage selon l'une quelconque des revendications précédentes, **caractérisé en ce que** l'information représentative d'une porte de coffre en position ouverte ou fermée est reçue d'un unique capteur (4).

5. Système de pilotage selon la revendication 3, **caractérisé en ce que** l'information représentative d'une porte de coffre en position ouverte ou fermée est reçue d'un ensemble de deux capteurs (4, 5).

6. Système de pilotage selon la revendication 5, **caractérisé en ce que** les deux capteurs (4, 5) sont des interrupteurs connectés en parallèle, chaque interrupteur étant en position ouverte lorsque la porte de coffre est fermée.

7. Système de pilotage selon la revendication 5, **caractérisé en ce que** les deux capteurs (4, 5) sont des interrupteurs connectés en série, chaque interrupteur étant en position fermée lorsque la porte de coffre est fermée.

8. Système de pilotage selon l'une quelconque des revendications précédentes, **caractérisé en ce que** le premier ensemble (1) et le deuxième ensemble (2) comprennent au moins un feu de position (10ₐ, 11ₐ, 20ₐ, 21ₐ) et les indicateurs de direction (12ₐ, 13ₐ, 22ₐ, 23ₐ).

9. Système de pilotage selon l'une quelconque des revendications précédentes, **caractérisé en ce que** le premier ensemble (1) et le deuxième ensemble (2) comprennent en outre les feux stop (14ₐ, 15ₐ, 24ₐ, 25ₐ).

10. Système de pilotage selon les revendications 8 et 9, **caractérisé en ce que** le premier ensemble et/ou le deuxième ensemble comportent deux modules, un premier module gauche (1ₐ, 2ₐ) regroupant un feu de position gauche (10ₐ, 20ₐ), un indicateur de direction gauche (12ₐ, 22ₐ) et un feu stop gauche (14ₐ, 24ₐ), et un deuxième module droit (1_{b}, 2_{b}) regroupant un feu de position droit (11ₐ, 21ₐ), un indicateur de direction droit(13ₐ, 23ₐ) et un feu stop gauche (15ₐ, 25ₐ), et **en ce que** ladite logique de commande (17, 27) est répartie dans deux modules pris dans chacun des premier et deuxième ensembles (1, 2).

11. Système de pilotage selon l'une quelconque des revendications précédentes, **caractérisé en ce que** chacun des premier ensemble (1) et des deuxième ensemble (2) comporte un « OU » à diodes pour permettre l'alimentation de la logique de commande (17, 27) à partir d'au moins une borne d'activation parmi un ensemble de bornes d'activation (30-33) aptes à activer les dispositifs de signalisation (10ₐ-15ₐ, 20ₐ-25ₐ).

12. Système de pilotage selon l'une quelconque des revendications précédentes, **caractérisé en ce qu'**au moins une source lumineuse est une diode électroluminescente, ou une OLED.

## Patentansprüche

1. System zur Steuerung der hinteren Signalisierungsbeleuchtung für ein Kraftfahrzeug, umfassend eine erste Menge (1) von Signalisierungsvorrichtungen, die auf der Außenseite einer Kofferraumtür angeordnet sind, die geeignet sind, zu arbeiten, wenn sich die Tür des Kofferraums in geschlossener Position befindet, eine zweite Menge (2) von Signalisierungsvorrichtungen, die angeordnet sind, zu arbeiten, wenn sich die Tür des Kofferraums in offener Position befindet, indem sie die Signalisierungsvorrichtungen der ersten Menge ersetzen, und einen Sensor (4), der geeignet ist, eine Information zu liefern, die für den offenen oder geschlossenen Zustand der Tür des Kofferraums repräsentativ ist, **dadurch gekennzeichnet, dass** jede Signalisierungsvorrichtung eine Lichtquelle (10ₐ-15ₐ, 20ₐ-25ₐ) in Reihe mit einem Schalter (16ₐ-16_{f}, 26ₐ-26_{f}) aufweist, und dadurch, dass das System eine Steuerungslogik (17, 27) aufweist, die wenigstens teilweise in die erste und zweite Menge (1, 2) integriert ist, wobei die Steuerungslogik (17, 27) einen Verstärker (17) für die erste Menge (1) und einen Umkehrverstärker (27) für die zweite Menge (2) aufweist, wobei der Verstärker (17) elektrisch mit dem Sensor (4) und dem Ausgang des Verstärkers (17) verbunden ist, der ein erstes Steuersignal liefert, das geeignet ist, das Umschalten der Gesamtheit der Schalter (16ₐ-16_{f}) der ersten Menge (1) zu steuern, wobei der Eingang des Umkehrverstärkers (27) ebenfalls elektrisch mit dem Sensor (4) verbunden ist, wobei der Ausgang des Umkehrverstärkers (27) ein zweites Steuersignal liefert, das das erste Steuersignal ergänzt und geeignet ist, das Umschalten der Gesamtheit der Schalter (26ₐ-26_{f}) der zweiten Menge (2) zu steuern, so dass die Steuerungslogik in der Lage ist, gleichzeitig Folgendes zu steuern:
entweder das Öffnen aller Schalter (16ₐ-16_{f}) in Reihe mit den Lichtquellen (10ₐ-15ₐ) der ersten Menge (1) und das Schließen aller Schalter (26ₐ-26_{f}) in Reihe mit den Lichtquellen (20ₐ-25ₐ) der zweiten Menge (2) bei Empfang einer Information, die für eine Kofferraumtür in offener Position repräsentativ ist;
oder das Schließen aller Schalter (16ₐ-16_{f}) in Reihe mit den Lichtquellen (10ₐ-15ₐ) der ersten Menge (1) und das Öffnen aller Schalter (26ₐ-26_{f}) in Reihe mit den Lichtquellen (20ₐ-25ₐ) der zweiten Menge (2) bei Empfang einer Information, die für eine Kofferraumtür in geschlossener Position repräsentativ ist.

2. Steuerungssystem nach Anspruch 1, wobei die zweite Menge (2) von Signalisierungsvorrichtungen geeignet ist, so angeordnet zu sein, dass sie von außen nicht sichtbar ist, wenn die Kofferraumtür geschlossen ist.

3. Steuerungssystem nach Anspruch 1, wobei die zweite Menge (2) von Signalisierungsvorrichtungen geeignet ist, so angeordnet zu sein, dass sie von außen sichtbar ist, wenn die Kofferraumtür geschlossen ist.

4. Steuerungssystem nach einem der vorhergehenden Ansprüche, **dadurch gekennzeichnet, dass** die Information, die für eine Kofferraumtür in offener oder geschlossener Position repräsentativ ist, von einem einzelnen Sensor (4) empfangen wird.

5. Steuerungssystem nach Anspruch 3, **dadurch gekennzeichnet, dass** die Information, die für eine Kofferraumtür in offener oder geschlossener Position repräsentativ ist, von einer Menge aus zwei Sensoren (4, 5) empfangen wird.

6. Steuerungssystem nach Anspruch 5, **dadurch gekennzeichnet, dass** die zwei Sensoren (4, 5) Schalter sind, die parallel geschaltet sind, wobei sich jeder Schalter in offener Position befindet, wenn die Kofferraumtür geschlossen ist.

7. Steuerungssystem nach Anspruch 5, **dadurch gekennzeichnet, dass** die zwei Sensoren (4, 5) Schalter sind, die in Reihe geschaltet sind, wobei sich jeder Schalter in geschlossener Position befindet, wenn die Kofferraumtür geschlossen ist.

8. Steuerungssystem nach einem der vorhergehenden Ansprüche, **dadurch gekennzeichnet, dass** die erste Menge (1) und die zweite Menge (2) mindestens eine Positionsleuchte (10ₐ, 11ₐ, 20ₐ, 21ₐ) und die Richtungsanzeiger (12ₐ, 13ₐ, 22ₐ, 23ₐ) umfassen.

9. Steuerungssystem nach einem der vorhergehenden Ansprüche, **dadurch gekennzeichnet, dass** die erste Menge (1) und die zweite Menge (2) ferner die Bremsleuchten (14ₐ, 15ₐ, 24ₐ, 25ₐ) umfassen.

10. Steuerungssystem nach den Ansprüchen 8 und 9, **dadurch gekennzeichnet, dass** die erste Menge und/oder die zweite Menge zwei Module aufweisen, ein erstes, linkes Modul (1ₐ, 2ₐ), das eine linke Positionsleuchte (10ₐ, 20ₐ), einen linken Richtungsanzeiger (12ₐ, 22ₐ) und eine linke Bremsleuchte (14ₐ, 24ₐ) umfasst, und ein zweites, rechtes Modul (1_{b}, 2_{b}), das eine rechte Positionsleuchte (11ₐ, 21ₐ), einen rechten Richtungsanzeiger (13ₐ, 23ₐ) und eine linke Bremsleuchte (15ₐ, 25ₐ) umfasst, und dadurch, dass die Steuerungslogik (17, 27) in zwei Modulen aus jeder der ersten und zweiten Menge (1, 2) verteilt ist.

11. Steuerungssystem nach einem der vorhergehenden Ansprüche, **dadurch gekennzeichnet, dass** jede der ersten Menge (1) und der zweiten Menge (2) ein Dioden-"ODER" aufweist, um die Versorgung der Steuerungslogik (17, 27) von mindestens einem Aktivierungsanschluss aus einer Menge von Aktivierungsanschlüssen (30-33) zu gestatten, die geeignet sind, die Signalisierungsvorrichtungen (10ₐ-15ₐ, 20ₐ-25ₐ) zu aktivieren.

12. Steuerungssystem nach einem der vorhergehenden Ansprüche, **dadurch gekennzeichnet, dass** mindestens eine Lichtquelle eine Leuchtdiode oder eine OLED ist.

## Claims

1. System for controlling rear signal lighting for a motor vehicle, comprising a first set (1) of signalling devices disposed on the outside of a boot lid, capable of operating when the boot lid is in closed position, a second set (2) of signalling devices capable of operating when the boot lid is in the open position by replacing the signalling devices of the first set, and a sensor (4) capable of supplying information representative of the open or closed state of the boot lid, **characterized in that** each signalling device comprises a light source (10ₐ-15ₐ, 20ₐ-25ₐ) in series with a switch (16ₐ-16_{f}, 26ₐ-26_{f}), and **in that** the system comprises a control logic (17, 27) incorporated at least partly in said first and second sets (1, 2), the control logic (17, 27) comprising an amplifier (17) for the first set (1) and an inverting amplifier (27) for the second set (2), the input of the amplifier (17) being linked electrically to the sensor (4) and the output of the amplifier (17) delivering a first command signal capable of commanding the switchover of all of the switches (16ₐ-16_{f}) of the first set (1), the input of the inverting amplifier (27) being also linked electrically to the sensor (4), the output of the inverting amplifier (27) delivering a second command signal complementing the first command signal, and capable of commanding the switchover of all of the switches (26ₐ-26_{f}) of the second set (2), such that the control logic is capable of simultaneously commanding:
either the opening of all of the switches (16ₐ-16_{f}) in series with the light sources (10ₐ-15ₐ) of the first set (1) and the closing of all of the switches (26ₐ-26_{f}) in series with the light sources (20ₐ-25ₐ) of the second set (2) on reception of information representative of a boot lid in open position;
or the closing of all of the switches (16ₐ-16_{f}) in series with the light sources (10ₐ-15ₐ) of the first set (1) and the opening of all of the switches (26ₐ-26_{f}) in series with the light sources (20ₐ-25ₐ) of the second set (2) on reception of information representative of a boot lid in closed position.

2. Control system according to Claim 1, wherein the second set (2) of signalling devices is capable of being disposed so as not to be visible from the outside when the boot lid is closed.

3. Control system according to Claim 1, wherein the second set (2) of signalling devices is capable of being disposed so as to be visible from the outside when the boot lid is closed.

4. Control system according to any one of the preceding claims, **characterized in that** the information representative of a boot lid in open or closed position is received from a single sensor (4).

5. Control system according to Claim 3, **characterized in that** the information representative of a boot lid in open or closed position is received from a set of two sensors (4, 5).

6. Control system according to Claim 5, **characterized in that** the two sensors (4, 5) are switches connected in parallel, each switch being in open position when the boot lid is closed.

7. Control system according to Claim 5, **characterized in that** the two sensors (4, 5) are switches connected in series, each switch being in closed position when the boot lid is closed.

8. Control system according to any one of the preceding claims, **characterized in that** the first set (1) and the second set (2) comprise at least one position light (10ₐ, 11ₐ, 20ₐ, 21ₐ) and direction indicators (12ₐ, 13ₐ, 22ₐ, 23a) .

9. Control system according to any one of the preceding claims, **characterized in that** the first set (1) and the second set (2) also comprise stop lights (14ₐ, 15ₐ, 24ₐ, 25ₐ).

10. Control system according to Claims 8 and 9, **characterized in that** the first set and/or the second set comprise two modules, a first, left hand module (1ₐ, 2ₐ) combining a left position light (10ₐ, 20ₐ), a left direction indicator (12ₐ, 22ₐ) and a left stop light (14ₐ, 24ₐ), and a second, right hand module (1_{b}, 2_{b}) combining a right position light (11ₐ, 21ₐ), a right direction indicator (13ₐ, 23ₐ) and a left stop light (15ₐ, 25ₐ) , and **in that** said control logic (17, 27) is allocated in two modules taken in each of the first and second sets (1, 2) .

11. Control system according to any one of the preceding claims, **characterized in that** each of the first set (1) and second set (2) comprises a diode-OR to allow the control logic (17, 27) to be supplied from at least one activation terminal out of a set of activation terminals (30-33) capable of activating the signalling devices (10ₐ-15ₐ, 20ₐ-25ₐ) .

12. Control system according to any one of the preceding claims, **characterized in that** at least one light source is a light-emitting diode, or an OLED.
